# EUROPEAN PATENT SPECIFICATION

(11) **EP 4 167 009 B1**
(45) Date of publication and mention of the grant of the patent: **03.06.2026**
(21) Application number: 21203023.3
(22) Date of filing: 15.10.2021
(51) Int. Cl.: G02B 21/00

(54) **MICROSCOPE AND METHOD OF OPERATING A MICROSCOPE**
MIKROSKOP UND VERFAHREN ZUM BETREIBEN EINES MIKROSKOPS
MICROSCOPE ET PROCÉDÉ D'UTILISER D'UN MICROSCOPE

(43) Date of publication of application: 19.04.2023
(73) Proprietor: PreciPoint Innovation GmbH, 98701 Großbreitenbach (DE)
(72) Inventor: ZALVIDEA, Dobryna Dr., 85356 Freising (DE)
(74) Representative: Schmitt-Nilson Schraud Waibel Wohlfrom Patentanwälte Partnerschaft mbB

(56) References cited:
- US-A1- 2007 206 276
- US-A1- 2008 218 849
- US-A1- 2020 064 611
- GLEB VDOVIN: "Microlens arrays | Wavefront sensors | Products", 15 March 2022 (2022-03-15), pages 1 - 2, XP055901368, Retrieved from the Internet <URL:http://www.okotech.com/microlens-arrays> [retrieved on 20220315]
- "Cytometry: Part B", vol. 123, 1 January 2014, SAN DIEGO [U.A.] : ACAD. PRESS, US, ISSN: 0091-679X, article OREOPOULOS JOHN ET AL: "Spinning-disk confocal microscopy", pages: 153 - 175, XP055886762, DOI: 10.1016/B978-0-12-420138-5.00009-4

## Description

The present invention is in the field of microscopy. In particular, the present invention relates to microscopy applications where a highly targeted, highly localised excitation of a microscopic sample is carried out.

Confocal microscopy is a common approach for exciting a sample with very high resolution. In confocal microscopy, one or more light beams are focused through one or more pinholes, in order to use the light of said one or more light beams in a very targeted manner, while blocking ambient light that does not contribute to the well-behaved one or more light beams via a light blocking structure around the one or more pinholes.

US 2008/0218849A1 discloses a device for confocal observation of a specimen, comprising an objective, a mask, which is located in the illumination beam path and the image beam path and which is rotatable around a central axis, the mask being imaged onto the specimen by means of the objective and being provided with openings for generating an illumination pattern moving on the specimen, an arrangement of a plurality of focussing microoptics which is adjusted to the geometric arrangement of the openings of the mask and to the rotation of the mask in order to concentrate the illumination light by each of the microoptics into a respective one of the openings of the mask, and a beam splitter for separating light from the specimen which has been collected by the objective and which has passed through the openings of the mask from illumination light, wherein the beam splitter is arranged in the beam path between the mask and the arrangement of the microoptics, and wherein an optical arrangement is provided in the beam path between the mask and the arrangement of the microoptics for generating an infinity space in which the beam splitter is located.

US 2020/0064611 A1 discloses systems and methods for instant structured microscopy where total internal reflection fluorescence techniques are used to improve optical sectioning and signal-to-noise ratio of structured illumination microscopy.

US 2007/0206276 A1 discloses a method and a microscope, in particular a laser scanning fluorescence microscope, for high spatial resolution examination of samples, the sample to be examined comprising a substance that can be repeatedly converted from a first state into a second state, comprising the steps that the substance in a sample region to be recorded is firstly brought into the first state, and that the second state is induced by means of an optical signal, spatially delimited subregions being specifically excluded within the sample region to be recorded, are defined with regard to increasing resolution in any desired direction and with regard to an increased imaging rate by the fact that the optical signal is simultaneously concentrated at a number of focal points, and the focal points are focused into various sites of the sample.

In order to allow for the scanning of an extended area of a microscopic sample, confocal microscopes have been developed to include a rotatable microlens disk and a rotatable pinhole disk. The microlens disk comprises a high number of microlenses, and the pinhole disk comprises a high number of pinholes. The microlens disk and the pinhole disk are co-rotated in operation, such that the localized excitations, resulting from the beam-forming of the microlenses and the blocking of ambient light by the pinhole disk, travel across the microscopic sample. With high rotational speeds of the microlens disk and the pinhole disk, extended excitation areas on microscopic samples and high scanning speeds of microscopic samples have been achieved. However, the resulting microscope designs have become quite complex. In particular, the high rotating speeds of the microlens disk and the pinhole disk and the high requirements in terms of their alignment in positioning and in rotation speed have made the resulting microscopes quite difficult to produce and to handle. The requirements in terms of manufacturing accuracy of the microlens disk and the pinhole disk, the requirements in terms of accurately supporting the microlens disk and the pinhole disk relative to each other, and the requirements in terms of achieving identical or quasi-identical rotating speeds of the microlens disk and the pinhole disk have made these systems very complex and often times unacceptably unreliable.

Accordingly, it would be beneficial to provide a microscope that allows for high speed scanning of microscopic samples with highly targeted sample excitation, while exhibiting a lower complexity than previous approaches.

The invention includes a microscope in accordance with claim 1 and a method of operating a microscope in accordance with claim 13. Further embodiments of the invention are given in the dependent claims.

According to the invention, the microscope comprises inter alia: a collimated light source, emitting a substantially collimated excitation light beam; a rotatable microlens disk, comprising a plurality of microlenses, with each of the plurality of microlenses focusing a portion of the substantially collimated excitation light beam towards a respective microlens focal point; a beam-forming lens system and a microscope objective, with the beam-forming lens system and the microscope objective jointly focusing a respective portion of the substantially collimated excitation light beam, travelling through a respective microlens focal point, at a respective sample illumination point; and a light barrier element, arranged within the beam-forming lens system or arranged between the beam-forming lens system and the microscope objective, the light barrier element being positioned at a lens system focal point, where light of the substantially collimated excitation light beam that passes the rotatable microlens disk in between the plurality of microlenses is focussed.

Exemplary embodiments of the invention allow for the provision of highly targeted, highly localized excitation of a sample across many sample illumination points, without having to rely on a pinhole disk that co-rotates with the rotatable microlens disk. The light barrier element, positioned at a lens system focal point, may have a similar effect as a pinhole disk in blocking light that does not contribute to the microlens beams formed by the rotatable microlens disk. At the same time, as the light barrier element is positioned at a lens system focal point, the light barrier element may be sized to have a low detrimental effect on the microlens beams, formed by the microlenses of the rotatable microlens disk. An effective blocking of undesired light may be achieved at a low cost of useful light, while eliminating the need for the highly complex set-up of the co-rotating microlens disk and pinhole disk. For a given light source power, a very good excitation of the sample may be achieved with a microscope system design that has comparably low complexity. In the sample images, as taken by a digital camera of the microscope, a low level of ambient light and/or a high level of contrast and/or a high signal to noise ratio may be achieved with a comparably low level of complexity.

The microscope comprises a collimated light source, emitting a substantially collimated excitation light beam in operation. The collimated light source emits substantially parallel light rays, which enter the optical system of the microscope and which form the basis for the downstream optical operations and the excitation of the sample.

The microscope comprises a rotatable microlens disk, comprising a plurality of microlenses, with each of the plurality of microlenses focusing a portion of the substanially collimated excitation light beam towards a respective microlens focal point. The plurality of microlenses may also be described as forming a plurality of microlens beams. In other words, the particular portion of the substantially collimated excitation light beam that is focused towards a respective microlens focal point by a particular microlens may also be referred to as a microlens beam. The expression of each of the plurality of microlenses focusing a portion of the substantially collimated excitation light beam towards a respective microlens focal point does not mean that all of the plurality of microlenses have to focus respective portions of the substantially collimated excitation light beam towards respective microlens focal points at the same time. In particular, in set-ups where the collimated light source illuminates only a portion of the rotatable microlens disk at any given point in time, only a subset of the plurality of microlenses form microlens beams at that point in time. However, when the rotatable microlens disk is rotated in operation, each of the plurality of microlenses forms a respective microlens beam at various points in time during the operation. In operation, the rotatable microlens disk may be rotated at very high rotation speeds, such as up to 5000 revolutions per minute or up to 10000 revolutions per minute or even more.

The plurality of microlenses may be arranged on the rotatable microlens disk in a variety of different patterns. The plurality of microlenses may in particular be arranged on the rotatable microlens disk in such a manner that the resulting microlens beams, when looked at in their entirety over the course of the rotation of the rotatable microlens disk, provide for a substantially uniform illumination of a sample plane of the microscope. The plurality of microlenses may for example be arranged in a densely packed spiral pattern. In particular, the plurality of microlenses may be arranged in a Nipkow disk pattern. They may also be arranged in any other suitable pattern that allows for an effective scanning of the sample via the microlens beams over time, i.e. over the course of the rotation of the rotatable microlens. The rotatable microlens disk may comprise a large number of microlenses, such as hundreds or thousands of microlenses.

The microscope comprises a beam-forming lens system and a microscope objective, with the beam-forming lens system and the microscope objective jointly focusing a respective portion of the substantially collimated excitation light beam, travelling through a respective microlens focal point, i.e. a respective microlens beam, at a respective sample illumination point. In other words, it is the same portion of the substantially collimated excitation light beam that is focused towards a particular microlens focal point by a particular microlens and that is then focused at a particular sample illumination point by the beam-forming lens system and the microscope objective. In yet other words, the position of the particular microlens determines the position of the associated microlens focal point, which in turn determines the position of the associated sample illumination point. The beam-forming lens system transforms microlens beams, as coming from the plurality of microlenses, into collimated microlens beams that are angled with respect to the original excitation light beam of the collimated light source and that are subsequently focused at respective sample illumination points by the microscope objective.

The microscope comprises a light barrier element, arranged within the beam-forming lens system or arranged between the beam-forming lens system and the microscope objective, the light barrier element being positioned at a lens system focal point, where light of the substantially collimated excitation light beam that passes the rotatable microlens disk in between the plurality of microlenses is focused. The expression of the light of the substantially collimated excitation light beam that passes the rotatable microlens disk in between the plurality of microlenses refers to that light that passes the rotatable microlens disk outside of the plurality of microlenses / besides the plurality of microlenses. The expression may also be thought of as referring to that portion of the substantially collimated excitation light beam that passes the rotatable microlens disk in a substantially straight matter.

Exemplary embodiments of the invention make use of the fact that there is/are one or more focal points of the beam-forming lens system, herein also referred to as lens system focal point(s), where light that enters the beam-forming lens system as parallel light rays comes together. At this lens system focal point / at these lens system focal points, the undesired light that passes the rotatable microlens disk without contributing to the desired microlens beams can be blocked / affected in a particularly convenient matter.

According to a further embodiment, the light barrier element comprises an intensity reducing element. The intensity reducing element may in particular be a semi-transparent element. By providing a semi-transparent element, the undesired light that has passed the rotatable microlens disk in between the plurality of microlenses may be reduced. The intensity reducing element may also be an opaque element. The opaque element may block the undesired light that has passed the rotatable microlens disk in between the plurality of microlenses entirely. In other words, the opaque element may completely eliminate said undesired light.

According to a further embodiment, the light barrier element comprises a phase shifting element. The phase shifting element may pass the undesired light on. However, by shifting its phase, the undesired light may become traceable within the microscope. In particular, the undesired light may be filtered out at another location in the microscope or may be subtracted from the useful light in another suitable manner.

According to a further embodiment, the light barrier element is a light barrier portion of a generally transparent mask. The generally transparent mask may be described as a structure that is transparent with the exception of a light barrier portion, such as an opaque portion. The generally transparent mask may in particular be a flat structure arranged within the beam-forming lens system or arranged between the beam-forming lens system and the microscope objective. The generally transparent mask may in particular be a generally transparent disk, such as a disk that is made of transparent material and that has an opaque portion, such as a black dot, arranged thereon. With the light barrier element being provided on a larger component, namely with the light barrier element being provided as part of a generally transparent mask, the light barrier element may be handled and positioned more easily and more reliably during manufacture and/or maintenance of the microscope.

According to a further embodiment, the light barrier element is arranged on a central axis through the beam-forming lens system and the microscope objective. The term central axis refers to a line that runs through the center of the beam-forming lens system and through the center of the microscope objective. It is possible that the central axis has a bend along its way, depending on wether or not the light within the microscope is re-directed via reflectors or the like.

According to the invention, the light barrier element has a barrier extension around the lens system focal point. In other words, the light barrier element is not a point-like element, but has a certain extension for affecting light around the lens system focal point. The light barrier element may have a barrier extension of less than 1 mm, in particular of less than 0.5 mm, further in particular of less than 0.2 mm, yet further in particular of less than 0.1 mm. The extension of the light barrier element is measured in a plane orthogonal to the central axis through the beam-forming lens system and the microscope objective, i.e. in a plane orthogonal to the general travelling direction of the excitation light. The extension of the light barrier element may be measured in the dimension of largest extension in the plane orthogonal to the central axis. For example, for a circular light barrier element, the barrier extension may be the diameter of the light barrier element. As a further example, for a square light barrier element, the barrier extension may be the diagonal of the light barrier element. The given values have been found to provide a light barrier element that reliably blocks / affects the undesired light, while having a low effect on the useful light and while still resulting in a light barrier element that can be handled and positioned in a reliable manner during manufacture and/or maintenance. The light barrier element may have a barrier extension of at least 1 µm.

According to the invention, the barrier extension is less than 10 % of an individual microlens beam extension at the position of the light barrier element. In this way, the light barrier element may block / affect all undesired light that has passed the rotatable microlens disk in between the plurality of microlenses, while blocking / affecting at most 10 % of the desired light of the microlens beam. For a comparably very low reduction in useful light, the undesired light may be blocked / affected in a very convenient, non-complex, and effective manner. The individual microlens beam extension is measured at the position of the light barrier element. This terminology considers the position of the light barrier element to be the axial position along the central axis through the beam-forming lens system and the microscope objective. As laid out above, the barrier extension is considered the extension in a cross-sectional plane orthogonal to the central axis. For determining the criterion of less than 10 %, the cross-sectional area of the light barrier element and the cross-sectional area of the individual microlens beam are compared at the position of the light barrier element. It is also possible that the barrier extension is such that less than 10 % of the power of an individual microlens beam is blocked / affected at the position of the light barrier element.

According to a further embodiment, the barrier extension is less than 10 % for each of the individual microlens beam extensions at the position of the light barrier element. In other words, all microlens beams are blocked / affected by less than 10 % by the light barrier element. In particular, all individual microlens beams may be blocked / affected to a comparable extent by the light barrier element. For example, it is possible that the light barrier element is shaped and arranged in such a manner that between 5 % and 10 % of the extensions of all individual microlens beams are blocked / affected. In this way, the potential relative impacts on the individual microlens beams, which may be undesirable in terms of uniform scanning of the sample, can be kept low.

According to one aspect of the invention, the light barrier element is arranged at a focal plane of the microscope objective. In particular, the light barrier element is arranged at a focal plane of the microscope objective between the beam-forming lens system and the microscope objective. At this position within the microscope, the light barrier element may be arranged with a particularly low impact on the useful light of the microlens beams. In particular, at this position within the microscope, the microlens beams may have a comparably wide spread, i.e. they may have a comparably large cross-sectional extension. Therefore, it is possible to block / affect the undesired light in an effective manner, while keeping the impact on the useful light at a very low level.

According to another aspect of the invention, the beam-forming lens system comprises a relay lens and the light barrier element is arranged at a focal plane of the relay lens. The provision of a relay lens and the arrangement of the light barrier element within the relay lens may allow for the provision of the light barrier element at an easily accessible, non-cramped portion of the microscope. In particular, the placement of the light barrier element at a focal plane of the relay lens may be carried out in an effective and reliable manner during manufacture and/or maintenance of the microscope.

According to a further embodiment, the plurality of microlenses have a circular shape or a square shape or a rectangular shape or a hexagonal shape or another polygonal shape.

According to a further embodiment, the plurality of microlenses are between 200 µm and 1200 µm, in particular between 500 µm and 1000 µm, further in particular between 700 µm and 900 µm, in cross-sectional extension. When the plurality of microlenses are circular microlenses, the plurality of microlenses may be between 200 µm and 1200 µm, in particular between 500 µm and 1000 µm, further in particular between 700 µm and 900 µm, in diameter. It has been found that the given values for the extensions of the microlenses allow for a good trade-off between the number of microlenses on the rotatable microlens disk, the achievable excitation intensities at the individual sample illumination points, and production aspects of the rotatable microlens disk. The given value ranges may provide for larger microlenses, as compared to previous approaches. For a given light source power, a stronger excitation at individual sample illumination points may be achieved, without compromising said higher intensity of desired illumination by undesired light. The light barrier element provides for additional degrees of freedom in sizing and arranging the microlenses, without leading to complex system considerations for handling the undesired light in between the plurality of microlenses.

According to a further embodiment, the fill factor of microlenses on the microlens disk is between 30 % and 80 %, in particular between 40 % and 70 %. Similar to allowing for larger microlens extensions, the light barrier element may allow for using microlens disks with lower fill factors, as compared to previous approaches, without having to pay for said lower fill factor with large quantities of undesired light on the sample and/or without having to pay for said lower fill factor with an increased complexity in the system. Lower fill factors may be particularly suitable for applications where the interference between microlens beams is intended to be kept very low.

According to a further embodiment, the rotatable microlens disk is a transparent disk.

According to a further embodiment, the rotatable microlens disk, including the plurality of microlenses, is an integral, unitary structure.

According to a further embodiment, the rotatable microlens disk is made by additive manufacturing, in particular by 3D-printing.

According to a further embodiment, the rotatable microlens disk is made from polydimethylsiloxane (PDMS) or poly-lactic acid (PLA) or polymethyl methacrylate (PMMA). The rotatable microlens disk may also be made from other suitable thermoplastic polymers. It is also possible that the rotatable microlens disk is made from glass or crystal or other suitable light transmissive materials.

According to the invention, the microscope is free of a rotatable pinhole disk. In other words, the microscope does not have a rotatable pinhole disk. In particular, the microscope does not have a rotatable pinhole disk that co-rotates with the rotatable microlens disk in operation. Accordingly, the plurality of microlenses are not required to focus light at the pinholes of a pinhole disk.

According to a further embodiment, the collimated light source comprises a laser light source. The laser light source may in particular comprise a laser and a light source lens system, with the light source lens system forming the collimated excitation light beam from the laser output.

According to a further embodiment, the laser light source is capable of creating a non-linear effect at a sample plane of the microscope. For creating said non-linear effect, the laser light source may be a high power laser light source or may be a pulsed laser light source. The pulsed laser light source may in particular be a picosecond laser or a femtosecond laser. By creating non-linear effects at the sample plane of the microscope, a wide range of sample analysis options may be enabled. In particular, various methods of so-called label-free diagnostics may be enabled. The term label-free diagnostics refers to particular kinds of analysis operations that have traditionally involved the staining / dyeing of samples and that have become feasible without staining / dyeing of samples due to the non-linear effects at the sample plane of the microscope. Accordingly, the light barrier element may allow for the provision of opportunities in label-free diagnostics, without having to rely on the complex system of a rotatable microlens disk in combination with a co-rotating pinhole disk. In particular, any of the methods of TPEF (Two Photon Excited Fluorescence), SHG (Second Harmonic Generation), 3PEF (Three Photon Excited Fluorescence), THG (Third Harmonic Generation), CARS (Coherent Anti-Stokes Raman Scattering), FLIM (Fluorescence Lifetime Imaging), Raman spectroscopy, SRS (Stimulated Raman Scattering), etc. may be implemented in the framework of the microscope in accordance with any of the embodiments described herein.

The provision of the light barrier element, as described herein, and the usage of a laser light source that is capable of creating a non-linear effect at the sample plane of the microscope have a very beneficial combinatory effect. In many previous approaches, one or two or more pinhole disks have been used to serve two purposes, namely to block light from the light source that is not conditioned by the plurality of microlenses, as described above, and to block stray light from the sample that results from imperfect excitation of the sample. Such stray light may interfere with the reaction of the sample to the microlens beams, which is intended to be observed, and may add undesired ambient light and/or noise to the images taken of the sample. The illumination methods that rely on a non-linear effect at the sample plane of the microscope tend to provide for a more targeted excitation, as compared to illumination methods that do not rely on a non-linear effect, and tend to produce less stray light from the sample. Accordingly, the problem of dealing with such stray light, e.g. in the form of back scatter from the sample, is less worrisome in microscope systems that rely on a non-linear effect at the sample plane. Accordingly, the absence of a pinhole disk is less of a concern in the context of the detrimental effect of stray light on the image quality. When using a laser light source that is capable of creating a non-linear effect at the sample plane of the microscope, a particularly high image contrast and/or signal to noise ratio may be achieved, irrespective of the absence of a pinhole disk in the path from the sample plane to the camera.

As indicated above, the microscope may be a laser microscope. It is also possible that the microscope is a fluorescence microscope. It is further possible that the microscope includes laser excitation in the framework of a fluorescence microscope.

According to a further embodiment, the microscope is a digital microscope. In particular, the microscope may comprise at least one digital camera. Further in particular, the at least one digital camera may be arranged and configured to take images of a reaction of a sample to the excitation via the microlens beams.

According to a further embodiment, the microscope further comprises: a dichroic mirror arranged between the beam-forming lens system and the microscope objective, a first tube lens, and a first digital camera, wherein the dichroic mirror, the first tube lens and the first digital camera are arranged such that light, emitted from a particular sample illumination point towards the microscope objective, passes through the microscope objective, is reflected at the dichroic mirror towards the first tube lens, and is focused by the first tube lens at a respective image point at the first digital camera. Alternatively or in addition, the microscope further comprises, on a back side of a sample plane: a back side microscope objective, a second tube lens, and a second digital camera, wherein the back side microscope objective, the second tube lens and the second digital camera are arranged such that light, emitted from a particular sample illumination point towards the back side microscope objective, passes through the back side microscope objective and is focused by the second tube lens at a respective image point at the second digital camera.

The invention also includes a method of operating a microscope that comprises a rotatable microlens disk, the method comprising inter alia: emitting a substantially collimated excitation light beam from a collimated light source towards the rotatable microlens disk; forming a plurality of microlens beams via a plurality of microlenses of the rotatable microlens disk from the substantially collimated excitation light beam; focusing the light of the plurality of microlens beams at respective sample illumination points via a beam-forming lens system and a microscope objective; and inhibiting light of the substantially collimated excitation light beam that passes the rotatable microlens disk in between the plurality of microlenses via a light barrier element, arranged at a lens system focal point within the beam-forming lens system or arranged at a lens system focal point between the beam-forming lens system and the microscope objective.

The additional features, modifications and effects, as described above with respect to any of the exemplary embodiments of the microscope, apply to the method of operating a microscope in an analogous manner. The inhibiting of light via the light barrier element may be any of blocking, reducing, and phase shifting the light.

Further exemplary embodiments of the invention are described with respect to the accompanying drawings, wherein:
Figure 1 shows a perspective view of a microscope in accordance with an exemplary embodiment of the invention;
Figure 2 shows a schematic diagram of selected components of a microscope in accordance with an exemplary embodiment of the invention, partially depicted as a block diagram and partially depicted as a ray-tracing diagram;
Figure 3 shows a schematic diagram of selected components of a microscope in accordance with another exemplary embodiment of the invention, partially depicted as a block diagram and partially depicted as a ray-tracing diagram;
Figure 4 shows a schematic diagram of selected components of a comparative example of a microscope that is not in accordance with the invention, partially depicted as a block diagram and partially depicted as a ray-tracing diagram;
Figure 5 shows a microlens disk, as may be part of a microscope in accordance with exemplary embodiments of the invention, in a top view; and
Figure 6 shows another microlens disk, as may be part of a microscope in accordance with exemplary embodiments of the invention, in a top view.

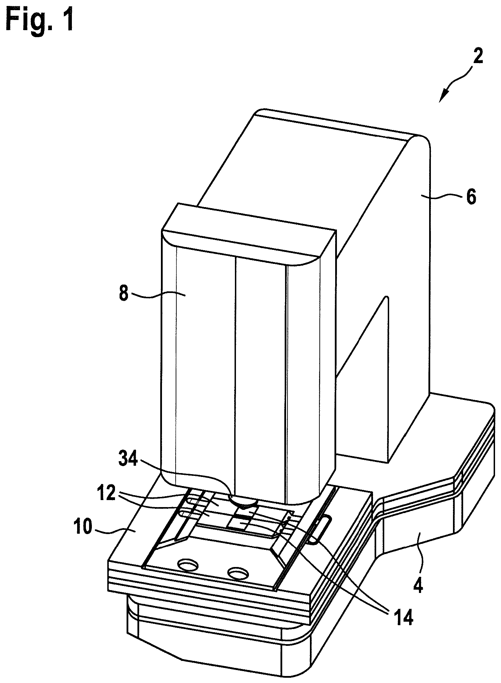

Figure 1 shows a microscope 2 in accordance with an exemplary embodiment of the invention in a perspective, three-dimensional view. The microscope 2 has a base 4, which supports the microscope 2. The base 4 may be placed on a table for providing a secure stand.

The base 4 comprises a table drive assembly, which are housed within and blocked from view in Figure 1 by a base housing. A table 10 is mounted to the base 4. The table 10 is movable with respect to the base 4. In particular, the table 10 is movable in two dimensions, referred to as x- and y-directions herein. In operation, the table 10 is moved by the table drive assembly in the x- and y-directions.

The table 10 has a light transmissive portion. A sample may be placed on the light transmissive portion of the table 10. In the operating scenario depicted in Figure 1, two slides 12 are arranged on the table via a clipping mechanism. Each of the two slides 12 comprises a sample 14, also referred to as specimen herein. The slides 12 are placed on the table 10 in such a way that the samples 14 are placed at the light transmissive portion of the table 10. The light transmissive portion may be made from a transparent or translucent material or may be a cut-out portion of the table 10. In the latter case, the table 10 forms a frame, through which light may travel. The plane of that portion of the table 10 where the samples are arranged is referred to as the x-y-plane of the microscope.

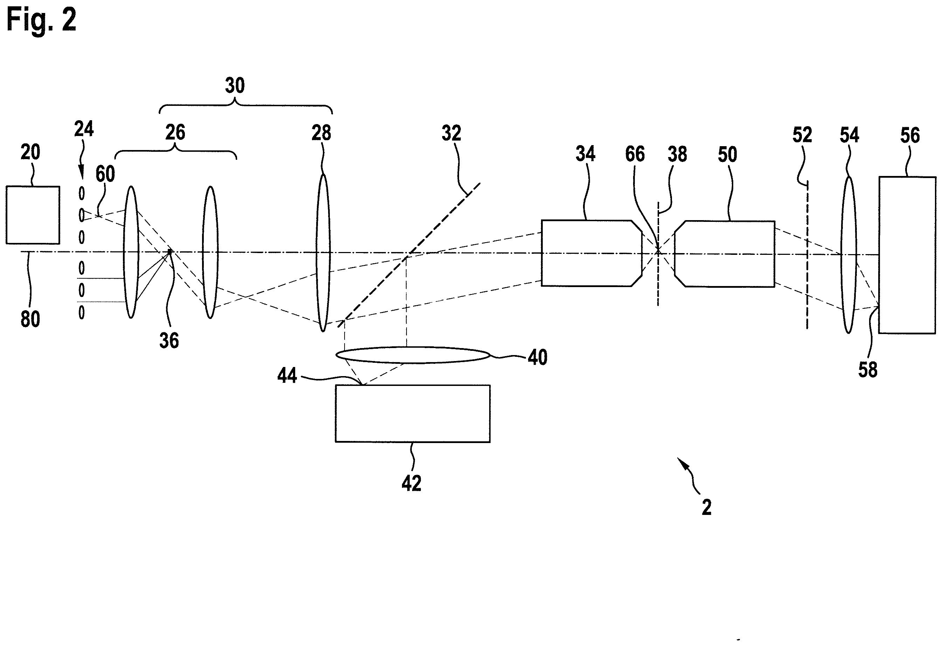

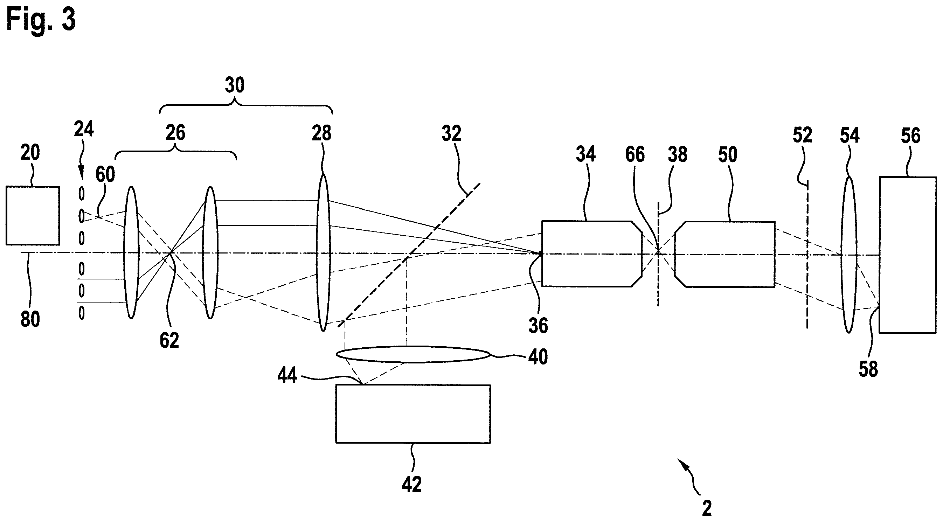

The microscope 2 further comprises a support arm 6 and an optical components housing 8. The support arm 6 is shaped to support the optical components housing 8, such that the optical components housing 8 hovers over the table 10. In the exemplary embodiment of Figure 1, both the optical components housing 8 and the base 4 house various optical components. Exemplary set-ups of the optical components are described below with respect to Figures 2 and 3. In the viewing direction of Figure 1, only a lower end of an objective microscope 34, which extends somewhat from the optical components housing 8 towards the table 10, is visible.

The optical components housing 8 may be movable with respect to the support arm 6 in a moving direction orthogonal to the x-y-plane. In other words, the optical components housing 8 may be movable in the z-direction of the microscope frame of reference. While this motion may be quite limited, it may be sufficient to bring a sample 14 in focus with respect to the optical system contained in the optical components housing 8 and the base 4.

In operation, the table drive assembly brings the table 10 to desired positions in the x- and y-directions. The table drive assembly may have any kind of suitable actuators, such as two small-scale electric motors, for the two directions of movement. Via driving the table 10 to various positions, image data representing various portions of the sample 14 may be generated.

Figure 2 shows a schematic diagram of selected components of a microscope in accordance with an exemplary embodiment of the invention, partially depicted as a block diagram and partially depicted as a ray-tracing diagram. In order to allow for an easy readability of the ray-tracing part of the diagram, Figure 2 is provided in a schematic cross-sectional view.

The microscope 2 comprises a collimated light source 20. The collimated light source 20 may in particular be a laser light source. Further in particular, the collimated light source 20 may comprise a laser and a light source lens system that forms an extended excitation light beam of substantially collimated light.

The microscope 2 further comprises a rotatable microlens disk that comprises a plurality of microlenses 24. In the schematic diagram of Figure 2, the plurality of microlenses 24 are depicted as stand-alone elements. However, it is understood that the plurality of microlenses 24 are arranged on / are part of a rotatable microlens disk, which is not shown for ease of illustration in Figure 2. The rotatable microlens disk is rotatable around a central axis 80 of the microscope 2. Together with the rotatable microlens disk, the plurality of microlenses 24 rotate around the central axis 80 during operation of the microscope 2.

In operation, the collimated light source 20 emits a substantially collimated excitation light beam onto the rotatable microlens disk. The substanially collimated excitation light beam may have such an extension that it does not shine light on the entire rotatable microlens disk at any given point in time. Assuming that the substantially collimated excitation light beam is output across substantially the entire light output face of the collimated light source 20, as depicted to the right of the collimated light source 20 in Figure 2, the substantially collimated excitation light beam may impinge on the rotatable microlens disk across about 50 % of its diameter in the depicted cross-section plane. Further assuming that the substantially collimated excitation light beam has a circular cross-section or a square cross-section, between 15 % and 25 % of the rotatable microlens disk may receive the substantially collimated excitation light beam at any given point in time. For ease of representation, the substantially collimated excitation light beam is not depicted in its totality in Figure 2. Rather, the path of certain portions of the substantially collimated excitation light beam through the optical system of the microscope 2 is depicted and will be described below.

The microscope 2 further comprises a beam-forming lens system 30, arranged along the central axis 80 of the microscope 2. The beam-forming lens system 30 comprises a relay lens 26, which is a composite lens structure having a plurality of individual lenses, and a scan lens 28. The beam-forming lens system 30 is arranged downstream of the rotatable microlens disk comprising the plurality of microlenses 24.

The microscope 2 further comprises a dichroic mirror 32, arranged downstream of the beam-forming lens system 30. The dichroic mirror 32 is arranged at a 45° angle with respect to the central axis 80. The dichroic mirror 32 is configured to pass the light, as emitted by the substantially collimated light source, through the dichroic mirror 32 in a substantially uneffected matter.

The microscope 2 further comprises a microscope objective 34. The microscope objective 34 is arranged on the central axis 80 downstream of the dichroic mirror 32.

The joint operation of the plurality of microlenses 24, the beam-forming lens system 30, and the microscope objective 34 will now be described with respect to an individual microlens beam, depicted with dashed lines in Figure 2. As a mere example, the second microlens from the top of the plurality of microlenses 24 is looked at in the following. This microlens in question is referred to as the particular microlens in the following description. The particular microlens forms that portion of the light of the substantially collimated excitation light beam that is incident on the particular microlens into a microlens beam, herein also referred to as an individual microlens beam. In particular, the particular microlens focuses that portion of the substantially collimated excitation light beam that is incident on the particular microlens towards a microlens focal point 60. After travelling through the microlens focal point 60, the microlens beam is incident on the beam-forming lens system 30, in particular incident on the relay lens 26. The relay lens 26 temporarily transforms the microlens beam into a beam of parallel light, before transforming the microlens beam into a beam of diverging light again, similar to the light beam that was incident on the relay lens 26. Conceptually, the relay lens 26 does not have a large impact on the microlens beam. However, its presence allows for the light blocking of undesired light, as will be described in more detail below.

After leaving the relay lens 26, the scan lens 28 turns the microlens beam into a beam of parallel light. Due to its nature of producing such microlens beams of parallel light, the beam-forming lens system 30 is considered and denoted as a beam-forming entity within the microscope 2.

After leaving the the beam-forming lens system 30, the parallel light of the microlens beam travels through the dichroic mirror 32 and reaches the microscope objective 34. The microscope objective 34 focuses the light of the microlens beam in question at a sample illumination point 66 on a sample plane 38. In this way, a highly targeted, highly localized illumination / excitation of the sample at the sample illumination point 66 may be achieved. In particular, a very large portion of the illumination power, incident on the particular microlens, may be focused on the sample illumination point 66. In this way, a strong excitation of the sample may be achieved at the sample illumination point 66 and a strong reaction of the sample to the excitation may be provoked. The sample plane 38 may for example correspond to a plane within the sample 14, as placed on the table 10 of the microscope 2 shown in Figure 1.

While Figure 2 illustrates the travel path of one individual microlens beam from the collimated light source 20 to the sample plane 38, it is understood that multiple such microlens beams travel through the system at any given point in time. For clarity of illustration, only one of them is shown in Figure 2. Further, it is understood that, due to the rotation of the microlens disk in operation, the plurality of microlenses 24 change their positions in operation and the corresponding microlens beams reach the sample plane 38 at many different points.

Apart from the light of the collimated light source 20 that is incident on the plurality of microlenses 24, some of the light of the collimated light source 20 passes the microlens disk in between the plurality of microlenses 24. The path of this light within the microscope 2 will now be described. In particular, the path of this light will be described with respect to exemplary light rays that are shown as continuous lines in Figure 2. For ease of illustration, only two such light rays are depicted in Figure 2. For further ease of illustration, the two light rays are depicted as passing between the plurality of microlenses 24 in the lower half of the rotatable microlens disk in the viewing direction of Figure 2. It is understood that this is not entirely technically correct in the particular embodiment of Figure 2, because the collimated light source 20 does not emit any portion of the substantially collimated excitation light beam onto the lower half of the microlens disk. However, in order to more easily differentiate between the microlens beam, discussed above, and the light passing in between the plurality of microlenses 24, the exemplary light rays of the undesired light are shown to start in the lower half of the plurality of microlenses 24. It is understood that analogous light rays exist in the upper half of the plurality of microlenses 24 and are indeed present in the upper half of the plurality of microlenses 24. These analogous light rays are mirror images of the depicted light rays, indicted by continuous lines, with respect to the central axis.

The light rays of the substantially collimated excitation light beam that pass the rotatable microlens disk in between the plurality of microlenses 24 is focused to a focal point within the relay lens 26. In particular, the light rays in question are focused to the focal point of the relay lens 26 by a first lens of the relay lens. The focal point of the relay lens 26 is also considered a first focal point of the beam-forming lens system 30, also denoted as a first lens system focal point herein.

In the exemplary embodiment of Figure 2, a light barrier element 36 is arranged at the first lens system focal point, i.e. at the focal point of the relay lens 26. The light barrier element 36 has a barrier extension around the central axis 80. The barrier extension is chosen in such a way that substantially all light that passes the rotatable microlens disk in between the plurality of microlenses 24 is blocked, even when considering imperfections / tolerances of the upstream portion of the microscope 2. Further, the barrier extension of the light barrier element 36 is chosen in such a way that less than 10 % of each individual microlens beam, passing through the relay lens 26, is blocked by the light barrier element 36. In this way, all or substantially all of the undesired light that passes in between the plurality of microlenses 24 is blocked, while only a low impact on the desired microlens beams takes place.

With the light barrier element 36 being arranged within the relay lens 26, the undesired light that passes the rotatable microlens disk in between the plurality of microlenses 24 is blocked at a very early point in the travel path through the microscope 2. Hence, this undesired light is eliminated early on and cannot contribute to any artefacts downstream of the relay lens 26. An early separation between passed-on useful light and blocked undesired light is made possible.

While being shown as a stand alone element, the light barrier element 36 may be part of a transparent mask that is arranged between the individual lenses of the relay lens 26. In particular, the light barrier element 36 may be an opaque portion, such as a black portion, on an otherwise transparent mask. The transparent mask may be easily handled and placed at the appropriate position during manufacture and/or maintenance of the microscope 2.

The light barrier element may be an opaque element or a semi-transparent element or a phase shifting element. In this way, the undesired light may be blocked/ eliminated or may be reduced or may be altered in such a way that it can be separated from the useful light later. Depending on the overall system set-up and the desired behavior thereof, an opaque element or a semi-transparent element or a phase shifting element may be used as the light barrier element 36.

For each of illustration, the light barrier element 36 is shown larger in comparison to the extension of the microlens beam than it may be in a real-world implementation. In this context, it is pointed out that the components of the microscope 2, as depicted in Figure 2, are not to scale. The dimensions of the depicted components are intended to convey the underlying working principles of the microscope 2 in an illustrative manner, not for providing a true to scale blue print. In this context, it is further pointed out that the terms point and plane, as for example used herein in the context of the microlens focal point, the sample illumination point, the lens system focal point, the sample plane, etc., are not intended as perfect geometric descriptions of the locations of the components in question, but as conceptual positions that may be associated with placement inaccuracies in the actual product due to imperfections / tolerances of the real-world implementations of the microscope. An exemplary barrier extension of the light barrier element 36 may be between 1 µm and 100 µm, in particular between 1 µm and 10 µm, in practical implementations.

The microscope 2 further comprises two camera systems. The first camera system comprises a first tube lens 40 and a first digital camera 42. The first tube lens 40 and the first digital camera 42 are arranged to capture light that stems from a reaction of the sample and that is emitted back towards the microscope objective 34. A reaction of the sample at the sample illumination point 66 may take substantially the same path through the microscope objective 34 and to the dichroic mirror 32 as described above with respect to the individual microlens beam, albeit in the return direction. The dichroic mirror 32 is configured to pass the light of the substantially collimated excitation light beam, as discussed above, and to reflect the light that the sample emits in response to being excited. Accordingly, the light coming back from the sample through the microscope objective 34 and to the dichroic mirror 32 is reflected by the dichroic mirror. In particular, this return light is reflected towards the first tube lens 40 and the first digital camera 42. The first tube lens 40 is configured and arranged to focus the light, coming from a particular sample illumination point 66, at a particular image point 44. The first digital camera 42 may capture this light as a particular pixel or as a particular set of pixels on the image sensor of the digital camera 42. Accordingly, the reaction of the sample at a particular sample illumination point translates into the capturing of according information at the first digital camera 42 and, thus, in a digital image taken by the first digital camera 42.

The second camera system is arranged on the back side of the sample plane 38. The second camera system comprises a back side microscope objective 50, a filter 52, a second tube lens 54, and a second digital camera 56. The back side microscope objective 50 and the second tube lens 54 direct light that is emitted by the sample in a forward direction in reaction to the excitation by the microlens beam towards the second digital camera 56. In particular, the back side microscope objective 50 and the second tube lens 54 are configured and arranged to focus the light, coming from a particular sample illumination point 66, at a particular image point 58. At the image point 58, the second digital camera 56 may translate the reaction of the sample in the forward direction into according information in a digital image, as described above with respect to the first camera 42. The filter 52 is provided to filter out the remainder of the excitation light beam that may have passed the sample plane 38 in an unimpeded manner and that may potentially introduce artefacts into the digital image taken by the second digital camera 56.

While the capturing of digital images has been described with a single image point 44 for the first digital camera 42 and a single image point 58 for the second digital camera 56, it is understood that different microlens beams, stemming from different microlenses and/or from different position of the microlenses on the rotating microlens disk, may combine to produce a full image of the reaction of the sample to the excitation. In addition, the sample may be moved around on the sample plane 38, e.g. via the movable table 10 of the microscope 2 of Figure 1, in order to capture multiple images of different portions of the sample. These multiple images may be assembled in an ensuing image processing operation, such as via stitching of the multiple images. Also, with a sample generally having a finite thickness, different layers of the sample may be aligned with the sample plane 38, such that different layers of the sample may be scanned and such that three-dimensional representations of the sample may be produced.

In terms of the mechanical set-up of the microscope 2 of Figure 1, the components of the microscope 2 of Figure 2 that are shown to the left of the sample plane 38 may be arranged within the optical components housing 8, and the components of the microscope 2 of Figure 2 that are shown to the right of the sample plane 38 may be arranged within the base 4. A reverse arrangement of the components is also possible. It is further pointed out that the components of the microscope 2 of Figure 2 may be arranged in any suitable manner and are not limited to being arranged in the mechanical set-up of the microscope 2 of Figure 1.

Figure 3 shows a schematic diagram of selected components of a microscope 2 in accordance with another exemplary embodiment of the invention, partially depicted as a block diagram and partially depicted as a ray-tracing diagram. The microscope 2 of Figure 3 is identical to the microscope 2 of Figure 2, with the exception of the placement of the light barrier element 36. For all other components and their functioning within the microscope 2, reference is made to above description of Figure 2.

In the exemplary embodiment of Figure 3, the light barrier element 36 is not arranged at the focal plane of the relay lens 26, i.e. not at the first lens system focal point 62. Instead, the light barrier element 36 is arranged at a second lens system focal point, i.e. at a second focal point of the beam-forming lens system 30. The light barrier element 36 is arranged between the beam-forming lens system 30 and the microscope objective 34. In the exemplary embodiment of Figure 3, the second lens system focal point is located immediatly adjacent to the microscope objective 34. Accordingly, the light barrier element 36 is arranged and depicted right next to the microscope objective 34 in the exemplary embodiment of Figure 3.

In order to show that the light barrier element 36 is similary or equally effective in blocking / affecting light that has passed in between the plurality of microlenses 24, the continuous lines, representing light rays that pass in between the plurality of microlenses, are extended downstream from the first lens system focal point 62. In particular, the light rays that pass the microlens disk 22 in between the plurality of microlenses 24 parallel to the central axis 80 also leave the relay lens 26 parallel to the central axis 80. The scan lens 28 focuses these light rays towards a second lens system focal point, which is between the beam-forming lens system 30 and the microscope objective 34. The light barrier element 36 is arranged around the second lens system focal point and blocks the undesired light represented by the continuous lines in Figure 3.

In the exemplary embodiment of Figure 3, the second lens system focal point is arranged at a focal plane of the microscope objective 34. As such, the second lens system focal point may often times not be readily accessible, e.g. because its location may be within the housing of the microscope objective 34. Accordingly, arranging the light barrier element 36 at the second lens system focal point may not be possible in all practical implementations of the microscope 2. However, when possible, the position of the light barrier element 36 at the second lens system focal point may provide for a particularly efficient implementation of the light blocking of the undesired light, because the extension of the light barrier element 36 may be chosen even smaller in comparison to the extension of an individual microlens beam. This is because the individual microlens beams tend to have a larger cross-sectional extension at the entry point into the microscope objective 34, as compared to their cross-sectional extension within the relay lens 26.

With the light barrier element 36 being arranged at a lens system focal point between the beam-forming lens system 30 and the microscope objective 34, the relay lens may be omitted form the beam-forming lens system 30 in the microscope 2 of Figure 3.

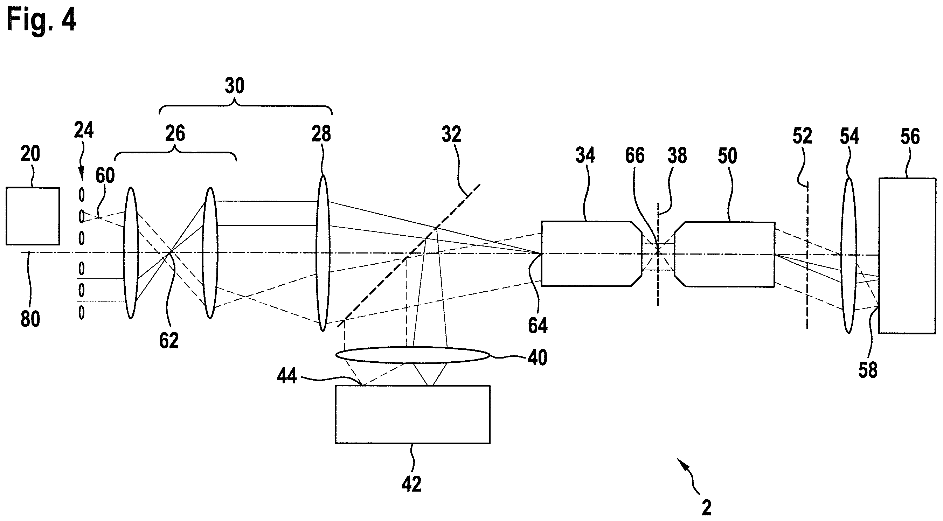

Figure 4 shows a comparative example of selected components of a microscope 2 that is not in accordance with an exemplary embodiment of the invention, partially shown as a block diagram and partially depicted as a ray-tracing diagram. While the overall set-up of the microscope 2 is almost identical to the set-up to the microscope 2 of Figure 2 and the set-up of the microscope 2 of Figure 3, the microscope 2 of Figure 4 does not have a light barrier element. In particular, no light barrier element is arranged at the first lens system focal point 62, and no light barrier element is arranged at the second lens system focal point 64.

In order to illustrate the effect of the absence of the light barrier element, the undesired light, again illustrated by continuous lines, is shown across the whole system of the microscope 2. The undesired light is neither focused to a single image point at the first digital camera 42 nor to a single image point at the second digital camera 56. Further, the two illustrative light rays of the undesired light reach the sample plane 38 at different positions, thus not contributing to a targeted illumination of individual sample illumination points. When considering the totality of all light rays that pass in between the plurality of microlenses 24, the undesired light provides for an ambient illumination of the sample plane and for an un-intended, wide-spread reaction of the sample to the undesired light. In terms of the digital images taken by the first digital camera 42 and the second digital camera 56, the undesired light may blur the reaction of the sample to the highly targeted, highly localized microlens beams, which is intended to be observed by the microscope 2. The undesired light may lower the contrast and/or the signal to noise ratio that can be attained in the images taken by the first digital camera 42 and the second digital camera 56.

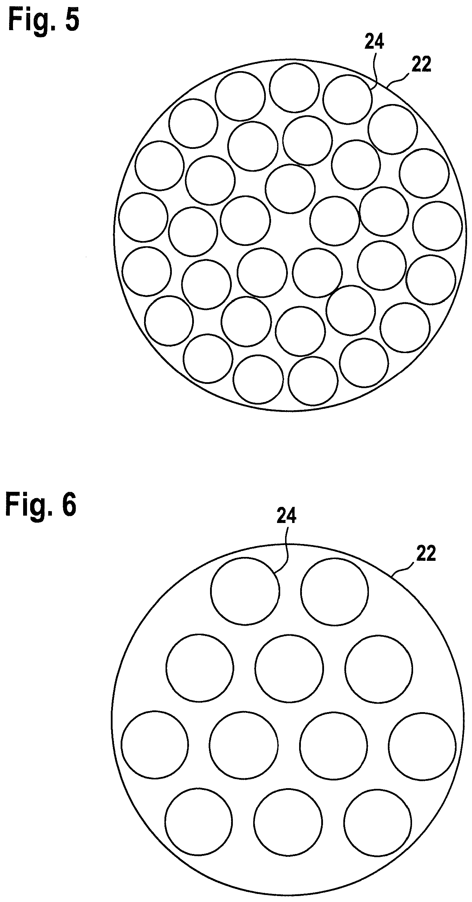

Figure 5 shows an exemplary rotatable microlens disk 22, as may be used in a microscope in accordance with exemplary embodiments of the invention, in a top view. The rotatable microlens disk 22 has a plurality of microlenses 24, which have a comparably high packing density in the exemplary embodiment of Figure 5. In other words, the fill factor of microlenses on the microlens disk 22 is comparably high. The microlens disk 22 of Figure 5 is shown for illustrative purposes, and it is understood that practical implementations of the microlens disk 22 may have much larger numbers of microlenses 24. Microlens disks of practical implementations may have thousands of microlenses. The microlens disk 22, including the plurality of microlenses 24, may be used in any of the exemplary embodiments of microscopes 2, as discussed above.

Figure 6 shows another exemplary microlens disk 22, as may be used in a microscope in accordance with exemplary embodiments of the invention, in a top view. As compared to the microlens disk 22 of Figure 5, the microlens disk 22 of Figure 6 has less microlenses 24 and a lower fill factor of microlenses on the microlens disk 22. However, the microlenses 24 of the microlens disk 22 of Figure 6 are larger in size than the microlenses 24 of the microlens disk 22 of Figure 5. With the light barrier element being arranged at a lens system focal point, the decrease in fill factor and the increase in microlens size may be carried out, without leading to an increased complexity in the rest of the system. While more undesired light may pass the microlens disk 22 in the case of a lower fill factor, the higher amount of undesired light may be blocked / affected in the same convenient manner by the light barrier element.

Figures 5 and 6 are mainly shown for illustrative purposes, illustrating different microlens sizes and packing densities. It is understood that practical implementations of the microlens disk 22 may have much larger numbers of microlenses 24, such as hundreds or thousands of microlenses. Also, it is understood that practical implementations of the microlens disk 22 may have patterns of microlenses that differ from the concentric arrangements shown in Figures 5 and 6. In particular, the plurality of microlenses 24 may be arranged in a spiral pattern, such as a Nipkow disk pattern, or in another suitable pattern that allows for the illumination of the sample in a highly uniform manner, when considering the sum of the microlens beams over the course of the rotation of the rotatable microlens disk 22

While the invention has been described with reference to exemplary embodiments, it will be understood by those skilled in the art that various changes may be made and equivalents may be substituted for elements thereof without departing from the scope of the invention, which is defined by the appended claims. In addition, many modifications may be made to adapt a particular situation or material to the teachings of the invention without departing from the essential scope thereof. Therefore, it is intended that the invention not be limited to the particular embodiment disclosed, but that the invention will include all embodiments falling within the scope of the appended claims.

## Claims

1. Microscope (2), comprising:
a collimated light source (20), emitting a substantially collimated excitation light beam;
a rotatable microlens disk (22), comprising a plurality of microlenses (24), with each of the plurality of microlenses (24) focusing a portion of the substantially collimated excitation light beam towards a respective microlens focal point (60); and
a beam-forming lens system (30) and a microscope objective (34), with the beam-forming lens system (30) and the microscope objective (34) jointly focusing a respective portion of the substantially collimated excitation light beam, travelling through a respective microlens focal point (60), at a respective sample illumination point (66);
a light barrier element (36), the light barrier element (36) being positioned at a lens system focal point (62, 64), where light of the substantially collimated excitation light beam that passes the rotatable microlens disk (22) in between the plurality of microlenses (24) is focussed;
**characterized in that**
the light barrier element (36) is arranged within the beam-forming lens system (30), with the beam-forming lens system (30) comprising a relay lens (26) and the light barrier element (36) being arranged at a focal plane of the relay lens (26), or wherein the light barrier element (36) is arranged between the beam-forming lens system (30) and the microscope objective (34), with the light barrier element (36) being arranged at a focal plane of the microscope objective (34);
wherein the light barrier element (36) has a barrier extension around the lens system focal point (62, 64), wherein the barrier extension is less than 10 % of an individual microlens beam extension at the position of the light barrier element (36), measured in the focal plane of the relay lens (26) or in the focal plane of the microscope objective (34), respectively, whereby for determining the criterion of less than 10 %, the cross-sectional area of the light barrier element and the cross-sectional area of the individual microlens beam are compared at the position of the light barrier element; and
wherein the microscope (2) is free of a rotatable pinhole disk that co-rotates with the rotatable microlens disk (22) in operation.

2. Microscope (2) according to claim 1, wherein the light barrier element (36) comprises an intensity reducing element, in particular a semi-transparent element or an opaque element, and/or a phase shifting element.

3. Microscope (2) according to claim 1 or 2, wherein the light barrier element (36) is a light barrier portion of a generally transparent mask.

4. Microscope (2) according to any of the preceding claims, wherein the light barrier element (36) is arranged on a central axis (80) through the beam-forming lens system (30) and the microscope objective (34).

5. Microscope (2) according to any of the preceding claims, wherein the light barrier element (36) has a barrier extension of less than 1 mm, in particular of less than 0.5 mm, further in particular of less than 0.2 mm.

6. Microscope (2) according any of the preceding claims,
wherein the plurality of microlenses (24) are between 200 µm and 1200 µm, in particular between 500 µm and 1000 µm, further in particular between 700 µm and 900 µm, in cross-sectional extension.

7. Microscope (2) according any of the preceding claims,
wherein the fill factor of microlenses on the microlens disk (22) is between 30% and 80%, in particular between 40% and 70%.

8. Microscope (2) according to any of the preceding claims, wherein the rotatable microlens disk (22) is a transparent disk.

9. Microscope (2) according to any of the preceding claims,
wherein the rotatable microlens disk (22) is made by additive manufacturing.

10. Microscope (2) according to any of the preceding claims,
wherein the rotatable microlens disk (22) is made from polydimethylsiloxane (PDMS) or poly-lactic acid (PLA) or polymethyl methacrylate (PMMA).

11. Microscope (2) according to any of the preceding claims, wherein the collimated light source (20) comprises a laser light source, in particular a laser light source capable of creating a non-linear effect at a sample plane of the microscope, further in particular a pulsed laser light source.

12. Microscope (2) according to any of the preceding claims,
wherein the microscope (2) further comprises:
a dichroic mirror (32) arranged between the beam-forming lens system (30) and the microscope objective (34),
a first tube lens (40), and
a first digital camera (42),
wherein the dichroic mirror (32), the first tube lens (40) and the first digital camera (42) are arranged such that light, emitted from a particular sample illumination point (66) towards the microscope objective (34), passes through the microscope objective (34), is reflected at the dichroic mirror (32) towards the first tube lens (40), and is focused by the first tube lens (40) at a respective image point (44) at the first digital camera (42);
and/or
wherein the microscope (2) further comprises, on a back side of a sample plane (38):
a back side microscope objective (50),
a second tube lens (54), and
a second digital camera (56),
wherein the back side microscope objective (50), the second tube lens (54) and the second digital camera (56) are arranged such that light, emitted from a particular sample illumination point (66) towards the back side microscope objective (54), passes through the back side microscope objective (50) and is focused by the second tube lens (40) at a respective image point (58) at the second digital camera (56).

13. Method of operating a microscope (2) that comprises a rotatable microlens disk (22), the method comprising:
emitting a substantially collimated excitation light beam from a collimated light source (20) towards the rotatable microlens disk (22);
forming a plurality of microlens beams via a plurality of microlenses (24) of the rotatable microlens disk (22) from the substantially collimated excitation light beam; and
focusing the light of the plurality of microlens beams at respective sample illumination points via a beam-forming lens system (30) and a microscope objective (34);
inhibiting light of the substantially collimated excitation light beam that passes the rotatable microlens disk (22) in between the plurality of microlenses (24) via a light barrier element (36),
**characterized in that**
the light barrier element (36) is arranged at a lens system focal point (62) within the beam-forming lens system (30), with the beam-forming lens system (30) comprising a relay lens (26) and the light barrier element (36) being arranged at a focal plane of the relay lens (26), or wherein the light barrier element (36) is arranged at a lens system focal point (64) between the beam-forming lens system (30) and the microscope objective (34), with the light barrier element (36) being arranged at a focal plane of the microscope objective (34),
wherein the light barrier element (36) has a barrier extension around the lens system focal point (62, 64), wherein the barrier extension is less than 10 % of an individual microlens beam extension at the position of the light barrier element (36), measured in the focal plane of the relay lens (26) or in the focal plane of the microscope objective (34), respectively, whereby for determining the criterion of less than 10 %, the cross-sectional area of the light barrier element and the cross-sectional area of the individual microlens beam are compared at the position of the light barrier element, and
wherein the microscope (2) is free of a rotatable pinhole disk that co-rotates with the rotatable microlens disk (22) in operation.

## Patentansprüche

1. Mikroskop (2), aufweisend:
eine Quelle (20) für kollimiertes Licht, die einen im Wesentlichen kollimierten Anregungslichtstrahl emittiert;
eine drehbare Mikrolinsenscheibe (22), die eine Mehrzahl von Mikrolinsen (24) aufweist, wobei jede der Mehrzahl von Mikrolinsen (24) einen Teil des im Wesentlichen kollimierten Anregungslichtstrahls zu einem entsprechenden Mikrolinsenbrennpunkt (60) hin fokussiert; und
ein strahlbildendes Linsensystem (30) und ein Mikroskopobjektiv (34), wobei das strahlbildende Linsensystem (30) und das Mikroskopobjektiv (34) gemeinsam einen entsprechenden Teil des im Wesentlichen kollimierten Anregungslichtstrahls, der durch einen entsprechenden Mikrolinsenbrennpunkt (60) läuft, an einem entsprechenden Probenbeleuchtungspunkt (66) fokussieren;
ein Lichtbarriereelement (36), wobei das Lichtbarriereelement (36) an einem Linsensystembrennpunkt (62, 64) positioniert ist, wo Licht des im Wesentlichen kollimierten Anregungslichtstrahls, das die drehbare Mikrolinsenscheibe (22) zwischen der Mehrzahl von Mikrolinsen (24) passiert, fokussiert wird;
**dadurch gekennzeichnet, dass**
das Lichtbarriereelement (36) innerhalb des strahlbildenden Linsensystems (30) angeordnet ist, wobei das strahlbildende Linsensystem (30) eine Relaislinse (26) aufweist und das Lichtbarriereelement (36) an einer Brennebene der Relaislinse (26) angeordnet ist, oder wobei das Lichtbarriereelement (36) zwischen dem strahlbildenden Linsensystem (30) und dem Mikroskopobjektiv (34) angeordnet ist, wobei das Lichtbarriereelement (36) an einer Brennebene des Mikroskopobjektivs (34) angeordnet ist;
wobei das Lichtbarriereelement (36) eine Barriereausdehnung um den Linsensystembrennpunkt (62, 64) herum aufweist, wobei die Barriereausdehnung weniger als 10 % einer einzelnen Mikrolinsenstrahlausdehnung an der Position des Lichtbarriereelements (36) gemessen in der Brennebene der Relaislinse (26) bzw. in der Brennebene des Mikroskopobjektivs (34) beträgt, wobei zum Bestimmen des Kriteriums von weniger als 10 % die Querschnittsfläche des Lichtbarriereelements und die Querschnittsfläche des individuellen Mikrolinsenstrahls an der Position des Lichtbarriereelements verglichen werden; und
wobei das Mikroskop (2) frei von einer drehbaren Lochblendenscheibe ist, die sich im Betrieb mit der drehbaren Mikrolinsenscheibe (22) mitdreht.

2. Mikroskop (2) nach Anspruch 1, wobei das Lichtbarriereelement (36) ein intensitätsreduzierendes Element, insbesondere ein halbtransparentes Element oder ein opakes Element, und/oder ein Phasenverschiebungselement aufweist.

3. Mikroskop (2) nach Anspruch 1 oder 2, wobei das Lichtbarriereelement (36) ein Lichtbarrierebereich einer im Allgemeinen transparenten Maske ist.

4. Mikroskop (2) nach einem der vorhergehenden Ansprüche, wobei das Lichtbarriereelement (36) auf einer Mittelachse (80) durch das strahlbildende Linsensystem (30) und das Mikroskopobjektiv (34) angeordnet ist.

5. Mikroskop (2) nach einem der vorhergehenden Ansprüche, wobei das Lichtbarriereelement (36) eine Barriereausdehnung von weniger als 1 mm, insbesondere von weniger als 0,5 mm, noch spezieller von weniger als 0,2 mm aufweist.

6. Mikroskop (2) nach einem der vorhergehenden Ansprüche,
wobei die Mehrzahl von Mikrolinsen (24) eine Querschnittsausdehnung zwischen 200 µm und 1200 µm, insbesondere zwischen 500 µm und 1000 µm, noch spezieller zwischen 700 µm und 900 µm aufweisen.

7. Mikroskop (2) nach einem der vorhergehenden Ansprüche,
wobei der Füllfaktor der Mikrolinsen auf der Mikrolinsenscheibe (22) zwischen 30 % und 80 %, insbesondere zwischen 40 % und 70 %, beträgt.

8. Mikroskop (2) nach einem der vorhergehenden Ansprüche, wobei die drehbare Mikrolinsenscheibe (22) eine transparente Scheibe ist.

9. Mikroskop (2) nach einem der vorhergehenden Ansprüche,
wobei die drehbare Mikrolinsenscheibe (22) durch additive Fertigung hergestellt ist.

10. Mikroskop (2) nach einem der vorhergehenden Ansprüche,
wobei die drehbare Mikrolinsenscheibe (22) aus Polydimethylsiloxan (PDMS) oder Polymilchsäure (PLA) oder Polymethylmethacrylat (PMMA) hergestellt ist.

11. Mikroskop (2) nach einem der vorhergehenden Ansprüche, wobei die Quelle (20) für kollimiertes Licht eine Laserlichtquelle aufweist, insbesondere eine Laserlichtquelle, die in der Lage ist, einen nichtlinearen Effekt in einer Probenebene des Mikroskops zu erzeugen, noch spezieller eine gepulste Laserlichtquelle.

12. Mikroskop (2) nach einem der vorhergehenden Ansprüche,
wobei das Mikroskop (2) ferner aufweist:
einen dichroischen Spiegel (32), der zwischen dem strahlbildenden Linsensystem (30) und dem Mikroskopobjektiv (34) angeordnet ist,
eine erste Tubuslinse (40) und
eine erste Digitalkamera (42),
wobei der dichroische Spiegel (32), die erste Tubuslinse (40) und die erste Digitalkamera (42) derart angeordnet sind, dass Licht, das von einem bestimmten Probenbeleuchtungspunkt (66) zu dem Mikroskopobjektiv (34) hin emittiert wird, das Mikroskopobjektiv (34) passiert, an dem dichroischen Spiegel (32) zu der ersten Tubuslinse (40) hin reflektiert wird und von der ersten Tubuslinse (40) an einem entsprechenden Bildpunkt (44) an der ersten Digitalkamera (42) fokussiert wird;
und/oder
wobei das Mikroskop (2) ferner auf einer Rückseite einer Probenebene (38) aufweist:
ein rückseitiges Mikroskopobjektiv (50),
eine zweite Tubuslinse (54) und
eine zweite Digitalkamera (56),
wobei das rückseitige Mikroskopobjektiv (50), die zweite Tubuslinse (54) und die zweite Digitalkamera (56) derart angeordnet sind, dass Licht, das von einem bestimmten Probenbeleuchtungspunkt (66) zu dem rückseitigen Mikroskopobjektiv (54) hin emittiert wird, das rückseitige Mikroskopobjektiv (50) passiert und von der zweiten Tubuslinse (40) an einem entsprechenden Bildpunkt (58) an der zweiten Digitalkamera (56) fokussiert wird.

13. Verfahren zum Betreiben eines Mikroskops (2), das eine drehbare Mikrolinsenscheibe (22) aufweist, wobei das Verfahren aufweist:
Emittieren eines im Wesentlichen kollimierten Anregungslichtstrahls von einer Quelle (20) für kollimiertes Licht zu der drehbaren Mikrolinsenscheibe (22) hin;
Bilden einer Mehrzahl von Mikrolinsenstrahlen mittels einer Mehrzahl von Mikrolinsen (24) der drehbaren Mikrolinsenscheibe (22) aus dem im Wesentlichen kollimierten Anregungslichtstrahl; und
Fokussieren des Lichts der Mehrzahl von Mikrolinsenstrahlen an entsprechenden Probenbeleuchtungspunkten über ein strahlbildendes Linsensystem (30) und ein Mikroskopobjektiv (34);
Behindern von Licht des im Wesentlichen kollimierten Anregungslichtstrahls, das die drehbare Mikrolinsenscheibe (22) zwischen der Mehrzahl von Mikrolinsen (24) passiert, mittels eines Lichtbarriereelements (36),
**dadurch gekennzeichnet, dass**
das Lichtbarriereelement (36) an einem Linsensystembrennpunkt (62) innerhalb des strahlbildenden Linsensystems (30) angeordnet ist, wobei das strahlbildende Linsensystem (30) eine Relaislinse (26) aufweist und das Lichtbarriereelement (36) an einer Brennebene der Relaislinse (26) angeordnet ist, oder wobei das Lichtbarriereelement (36) an einem Linsensystembrennpunkt (64) zwischen dem strahlbildenden Linsensystem (30) und dem Mikroskopobjektiv (34) angeordnet ist, wobei das Lichtbarriereelement (36) an einer Brennebene des Mikroskopobjektivs (34) angeordnet ist,
wobei das Lichtbarriereelement (36) eine Barriereausdehnung um den Linsensystembrennpunkt (62, 64) herum aufweist, wobei die Barriereausdehnung weniger als 10 % einer einzelnen Mikrolinsenstrahlausdehnung an der Position des Lichtbarriereelements (36) gemessen in der Brennebene der Relaislinse (26) bzw. in der Brennebene des Mikroskopobjektivs (34) beträgt, wobei zum Bestimmen des Kriteriums von weniger als 10 % die Querschnittsfläche des Lichtbarriereelements und die Querschnittsfläche des individuellen Mikrolinsenstrahls an der Position des Lichtbarriereelements verglichen werden, und
wobei das Mikroskop (2) frei von einer drehbaren Lochblendenscheibe ist, die sich im Betrieb mit der drehbaren Mikrolinsenscheibe (22) mitdreht.

## Revendications

1. Microscope (2), comprenant :
une source de lumière collimatée (20), émettant un faisceau de lumière d'excitation sensiblement collimatée ;
un disque microlentilles rotatif (22), comprenant une pluralité de microlentilles (24), chaque microlentille (24) de la pluralité de microlentilles (24) focalisant une partie du faisceau de lumière d'excitation sensiblement collimatée vers un point focal de microlentille respectif (60) ; et
un système de lentilles de formation de faisceau (30) et un objectif du microscope (34), le système de lentilles de formation de faisceau (30) et l'objectif du microscope (34) focalisant conjointement une partie respective du faisceau de lumière d'excitation sensiblement collimatée, traversant un point focal de microlentille respectif (60), en un point d'illumination d'échantillon respectif (66) ;
un élément de barrière lumineuse (36), l'élément de barrière lumineuse (36) étant positionné à un point focal du système de lentilles (62, 64), là où la lumière du faisceau de lumière d'excitation sensiblement collimatée qui passe le disque microlentilles rotatif (22) entre la pluralité de microlentilles (24) est focalisée ;
**caractérisé en ce que**
l'élément de barrière lumineuse (36) est disposé dans le système de lentilles de formation de faisceau (30), le système de lentilles de formation de faisceau (30) comprenant une lentille de relais (26) et l'élément de barrière lumineuse (36) étant disposé à un plan focal de la lentille de relais (26), ou dans lequel l'élément de barrière lumineuse (36) est disposé entre le système de lentilles de formation de faisceau (30) et l'objectif du microscope (34), l'élément de barrière lumineuse (36) étant disposé à un plan focal de l'objectif du microscope (34) ;
où l'élément de barrière lumineuse (36) a une extension de barrière autour du point focal du système de lentilles (62, 64), l'extension de barrière étant inférieure à 10 % de l'extension du faisceau de microlentille individuel au niveau de la position de l'élément de barrière lumineuse (36), mesurée dans le plan focal de la lentille de relais (26) ou dans le plan focal de l'objectif du microscope (34), respectivement, pour déterminer le critère de moins de 10 %, la surface de section transversale de l'élément de barrière lumineuse et la surface de section transversale du faisceau de microlentille individuel étant comparées au niveau de la position de l'élément de barrière lumineuse ; et
où le microscope (2) est dépourvu d'un disque de trous rotatif co-rotatif avec le disque microlentilles rotatif (22) en cours d'utilisation.

2. Microscope (2) selon la revendication 1, où l'élément de barrière lumineuse (36) comprend un élément de réduction d'intensité, en particulier un élément semi-transparent ou opaque, et/ou un élément de déphasage.

3. Microscope (2) selon la revendication 1 ou 2, dans lequel l'élément de barrière lumineuse (36) est une portion de barrière lumineuse d'un masque généralement transparent.

4. Microscope (2) selon l'une quelconque des revendications précédentes, dans lequel l'élément de barrière lumineuse (36) est disposé sur un axe central (80) traversant le système de lentilles de formation de faisceau (30) et l'objectif du microscope (34).

5. Microscope (2) selon l'une quelconque des revendications précédentes, dans lequel l'élément de barrière lumineuse (36) a une extension de barrière inférieure à 1 mm, en particulier inférieure à 0,5 mm, plus particulièrement inférieure à 0,2 mm.

6. Microscope (2) selon l'une quelconque des revendications précédentes, dans lequel la pluralité de microlentilles (24) ont une extension transversale comprise entre 200 um et 1200 um, en particulier entre 500 µm et 1000 µm, plus particulièrement entre 700 µm et 900 µm.

7. Microscope (2) selon l'une quelconque des revendications précédentes, dans lequel le facteur de remplissage des microlentilles sur le disque microlentilles (22) est compris entre 30% et 80%, en particulier entre 40% et 70%.

8. Microscope (2) selon l'une quelconque des revendications précédentes, dans lequel le disque microlentilles rotatif (22) est un disque transparent.

9. Microscope (2) selon l'une quelconque des revendications précédentes, dans lequel le disque microlentilles rotatif (22) est fabriqué par fabrication additive.

10. Microscope (2) selon l'une quelconque des revendications précédentes, dans lequel le disque microlentilles rotatif (22) est fabriqué à partir de polydiméthylsiloxane (PDMS) ou d'acide polylactique (PLA) ou de polyméthylméthacrylate (PMMA).

11. Microscope (2) selon l'une quelconque des revendications précédentes, dans lequel la source de lumière collimatée (20) comprend une source de lumière laser, en particulier une source de lumière laser capable de créer un effet non linéaire au niveau du plan d'échantillon du microscope, plus particulièrement une source de lumière laser pulsée.

12. Microscope (2) selon l'une quelconque des revendications précédentes, dans lequel le microscope (2) comprend en outre :
un miroir dichroïque (32) disposé entre le système de lentilles de formation de faisceau (30) et l'objectif du microscope (34),
une première lentille de tube (40), et
une première caméra numérique (42),
dans lequel le miroir dichroïque (32), la première lentille de tube (40) et la première caméra numérique (42) sont disposés de sorte que la lumière, émise depuis un point d'illumination d'échantillon particulier (66) vers l'objectif du microscope (34), passe à travers l'objectif du microscope (34), soit réfléchie par le miroir dichroïque (32) vers la première lentille de tube (40), et soit focalisée par la première lentille de tube (40) à un point d'image respectif (44) sur la première caméra numérique (42);
et/ou
dans lequel le microscope (2) comprend en outre, sur une face arrière d'un plan d'échantillon (38) :
un objectif de microscope arrière (50),
une seconde lentille de tube (54), et
une seconde caméra numérique (56).
où l'objectif de microscope arrière (50), la seconde lentille de tube (54) et la seconde caméra numérique (56) sont disposés de sorte que la lumière, émise depuis un point d'illumination d'échantillon particulier (66) vers l'objectif de microscope arrière (54), passe à travers l'objectif de microscope arrière (50) et soit focalisée par la seconde lentille de tube (54) à un point d'image respectif (58) sur la seconde caméra numérique (56).

13. Procédé d'utilisation d'un microscope (2) comprenant un disque microlentilles rotatif (22), le procédé comprenant :
émettre un faisceau de lumière d'excitation sensiblement collimatée depuis une source de lumière collimatée (20) vers le disque microlentilles rotatif (22);
former une pluralité de faisceaux de microlentilles via une pluralité de microlentilles (24) du disque microlentilles rotatif (22) à partir du faisceau de lumière d'excitation sensiblement collimatée; et
focaliser la lumière de la pluralité de faisceaux de microlentilles à des points d'illumination d'échantillon respectifs via un système de lentilles de formation de faisceau (30) et un objectif du microscope (34);
inhiber la lumière du faisceau de lumière d'excitation sensiblement collimatée qui passe le disque microlentilles rotatif (22) entre la pluralité de microlentilles (24) via un élément de barrière lumineuse (36),
**caractérisé en ce**
**que** l'élément de barrière lumineuse (36) est disposé à un point focal du système de lentilles (62) à l'intérieur du système de lentilles de formation de faisceau (30), le système de lentilles de formation de faisceau (30) comprenant une lentille de relais (26) et l'élément de barrière lumineuse (36) étant disposé à un plan focal de la lentille de relais (26), ou dans lequel l'élément de barrière lumineuse (36) est disposé à un point focal du système de lentilles (64) entre le système de lentilles de formation de faisceau (30) et l'objectif du microscope (34), l'élément de barrière lumineuse (36) étant disposé à un plan focal de l'objectif du microscope (34),
où l'élément de barrière lumineuse (36) a une extension de barrière autour du point focal du système de lentilles (62, 64), l'extension de barrière étant inférieure à 10 % de l'extension d'un faisceau de microlentille individuel au niveau de la position de l'élément de barrière lumineuse (36), mesurée dans le plan focal de la lentille de relais (26) ou dans le plan focal de l'objectif du microscope (34), respectivement, pour déterminer le critère de moins de 10 %, la surface de section transversale de l'élément de barrière lumineuse et la surface de section transversale du faisceau de microlentille individuel étant comparées au niveau de la position de l'élément de barrière lumineuse;
et
où le microscope (2) est dépourvu d'un disque de trous rotatif co-rotatif avec le disque microlentilles rotatif (22) en cours d'utilisation.
